# EUROPEAN PATENT APPLICATION

(11) **EP 4 340 174 A1**
(43) Date of publication of application: **20.03.2024**
(21) Application number: 22824502.3
(22) Date of filing: 14.02.2022
(51) Int. Cl.: H02J 15/00, H01M 8/00, H01M 8/04, H01M 8/18, H02J 7/00, H02J 7/02

(54) **REDOX FLOW BATTERY SYSTEM**

(30) Priority: 17.06.2021 JP 2021100591
(71) Applicant: Mitsubishi Heavy Industries, Ltd., Tokyo 100-8332 (JP)
(72) Inventor: KIYABU, Toshiyasu, Tokyo 100-8332 (JP); SATO, Akio, Tokyo 100-8332 (JP); WAKASA, Tsuyoshi, Tokyo 100-8332 (JP); MORIYAMA, Kei, Tokyo 100-8332 (JP)
(74) Representative: Studio Torta S.p.A.
(86) International application number: PCT/JP2022/005552
(87) International publication number: WO 2022/264501

(57) **Abstract**

Provided is a redox flow battery system wherein operations related to charging and discharging of a redox flow battery have been improved. This redox flow battery system comprises a redox flow battery and a power supply device that supplies power for charging the redox flow battery to the redox flow battery, wherein the power supply device reduces the power supplied to the redox flow battery as charging of the redox flow battery approaches completion.

## Description

### Technical Field

The present disclosure relates to a redox flow battery system.

The present application claims priority based on Japanese Patent Application No. 2021-100591 filed in Japan on June 17, 2021, the contents of which are incorporated herein by reference.

### Background Art

As disclosed in PTL 1, for example, a redox flow battery includes a cell and a tank storing an electrolytic solution, and is a secondary battery in which the electrolytic solution is circulated between the cell and the tank by a pump to perform charging/discharging. In a redox flow battery, since a cell responsible for an output and an electrolytic solution (a tank storing the electrolytic solution) responsible for power storage are separated, it is possible to individually design the output and the electric capacity.

### Citation List

### Patent Literature

[PTL 1] Japanese Unexamined Patent Application Publication No. 2019-161755

### Summary of Invention

### Technical Problem

As described above, the redox flow battery is a system that stores electrical energy in the electrolytic solution. However, upper limit values of charging and lower limit values of discharging differ depending on a power storage rate of the electrolytic solution or a flow velocity of the electrolytic solution inside the cell. This is because a concentration overvoltage of the electrolytic solution is strongly affected by the power storage rate and the flow velocity of the electrolytic solution, and an energy loss also increases in a case where charging/discharging is performed in a region where the concentration overvoltage is large, that is, in a region where a resistance is large. Therefore, it is necessary to optimize an operation related to charging/discharging of the redox flow battery.

In view of the above circumstances, at least one embodiment of the present disclosure aims to provide a redox flow battery system in which an operation related to charging/discharging of a redox flow battery is improved. Solution to Problem

In order to achieve the above object, a redox flow battery system according to the present disclosure includes a redox flow battery; and a power supply device that supplies power for charging the redox flow battery to the redox flow battery, in which the power supply device reduces the power supplied to the redox flow battery toward an end of charging of the redox flow battery.

### Advantageous Effects of Invention

According to the redox flow battery system of the present disclosure, the upper limit value of charging of the redox flow battery can be increased by reducing the power supplied to the redox flow battery toward the end of charging of the redox flow battery. At the same time, since the lower limit value of the discharge of the redox flow battery can be lowered, it is possible to improve the operation related to the charging/discharging of the redox flow battery.

### Brief Description of Drawings

Fig. 1 is a schematic configuration diagram of a redox flow battery system according to Embodiment 1 of the present disclosure.
Fig. 2 is a graph illustrating results of studies on an operation of charging/discharging of a redox flow battery by the inventors of the present disclosure.
Fig. 3 is a graph illustrating a power generation state of a solar power generation device and a charging state of the redox flow battery.
Fig. 4 is a schematic configuration diagram of a modification example of the redox flow battery system according to Embodiment 1 of the present disclosure.
Fig. 5 is a schematic configuration diagram of a redox flow battery system according to Embodiment 2 of the present disclosure.

### Description of Embodiments

Hereinafter, a redox flow battery system according to an embodiment of the present disclosure will be described with reference to the drawings. The embodiment described below shows one aspect of the present disclosure and is not to limit the present disclosure and any change can be made within the scope of the technical idea of the present invention.

### (Embodiment 1)

### <Configuration of redox flow battery system according to Embodiment 1 of the present disclosure>

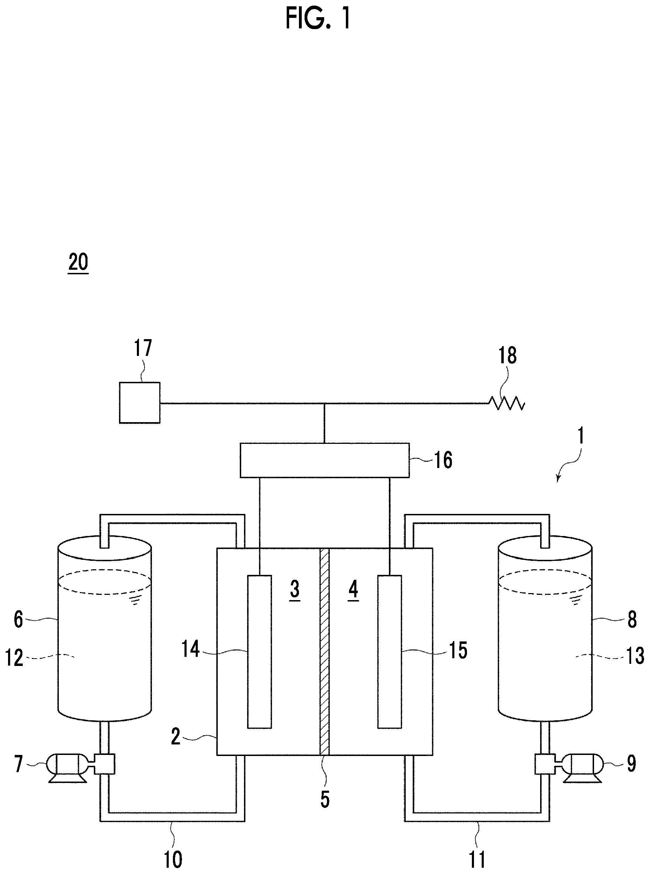

As illustrated in Fig. 1, a redox flow battery system 20 according to Embodiment 1 of the present disclosure includes a redox flow battery 1 and a power supply device 17 electrically connected to the redox flow battery 1 via an AC-DC converter 16. The power supply device 17 supplies power to the redox flow battery 1 in order to charge the redox flow battery 1, and may be a storage battery or a power generation device having any configuration. A load 18 consuming power released from the redox flow battery 1 is electrically connected to the AC-DC converter 16. In a case where a current supplied from the power supply device 17 is a DC current and the load 18 operates with the DC current, the AC-DC converter 16 is not required.

The redox flow battery 1 includes a cell 2 having a first chamber 3 and a second chamber 4 partitioned by a membrane 5, a first tank 6 that stores a first electrolytic solution 12 containing an active material, a first pump 7 that circulates the first electrolytic solution 12 between the first chamber 3 and the first tank 6, a second tank 8 that stores a second electrolytic solution 13 containing an active material, and a second pump 9 that circulates the second electrolytic solution 13 between the second chamber 4 and the second tank 8. The first tank 6 and the first pump 7 are provided in a first electrolytic solution circulation path 10 having one end and the other end connected to the first chamber 3. The second tank 8 and the second pump 9 are provided in a second electrolytic solution circulation path 11 having one end and the other end connected to the second chamber 4. A first electrode 14 is provided in the first chamber 3, and a second electrode 15 is provided in the second chamber 4. Each of the first electrode 14 and the second electrode 15 is electrically connected to the AC-DC converter 16.

Although only one cell 2 is illustrated in Fig. 1, the redox flow battery 1 may have two or more stacked cells. An output of the redox flow battery 1 may be designed according to the number of stacked cells 2. On the other hand, an electric capacity of the redox flow battery 1 may be designed according to capacities of the first tank 6 and the second tank 8, that is, amounts of the first electrolytic solution 12 and the second electrolytic solution 13.

Each of the first electrolytic solution 12 and the second electrolytic solution 13 is obtained by dissolving an active material in an aqueous solution containing a supporting electrolyte. As this aqueous solution, an alkaline aqueous solution in which potassium hydroxide, sodium hydroxide or the like is dissolved, a neutral aqueous solution in which potassium chloride, sodium chloride or the like is dissolved, or an acidic aqueous solution in which hydrogen chloride or sulfuric acid is dissolved may be used. The active material dissolved in one of the first electrolytic solution 12 and the second electrolytic solution 13 may be a metal ion such as vanadium, a metal complex, air, a halogen, an organic molecule such as quinone or hydroquinone, or the like.

### <Operation of redox flow battery system according to Embodiment 1 of present disclosure>

Next, an operation of the redox flow battery system 20 according to Embodiment 1 of the present disclosure will be described. By operating the first pump 7, the first electrolytic solution 12 stored in the first tank 6 is supplied to the first chamber 3 via the first electrolytic solution circulation path 10. After the first electrolytic solution 12 is filled in the first chamber 3, the first electrolytic solution 12 flows out from the first chamber 3 and is returned to the first tank 6 via the first electrolytic solution circulation path 10. In this way, the first electrolytic solution 12 is circulated between the first chamber 3 and the first tank 6. On the other hand, by operating the second pump 9, the second electrolytic solution 13 is circulated between the second chamber 4 and the second tank 8 in the same operation as described above.

When the redox flow battery 1 is charged, an AC current from the power supply device 17 is converted into a DC current by the AC-DC converter 16, and the DC current flows between the first electrode 14 and the second electrode 15. In the redox flow battery 1, when the first chamber 3 is used as a positive side and the second chamber 4 is used as a negative side, electrons flow through the second electrode 15 and are provided to the active material contained in the second electrolytic solution 13 from the second electrode 15. On the other hand, electrons are supplied to the first electrode 14 from the active material contained in the first electrolytic solution 12. Consequently, electric charge is accumulated in the first electrolytic solution 12, so that the redox flow battery 1 is charged.

When the redox flow battery 1 is discharged, electrons are supplied from the active material contained in the second electrolytic solution 13 to the second electrode 15 and electrons are also supplied from the first electrode 14 to the active material contained in the first electrolytic solution 12. Thus, a DC current flows between the first electrode 14 and the second electrode 15. This DC current is converted into an AC current by the AC-DC converter 16, and power is supplied to and consumed in the load 18.

### <Study on operation of charging/discharging of redox flow battery by inventors of present disclosure>

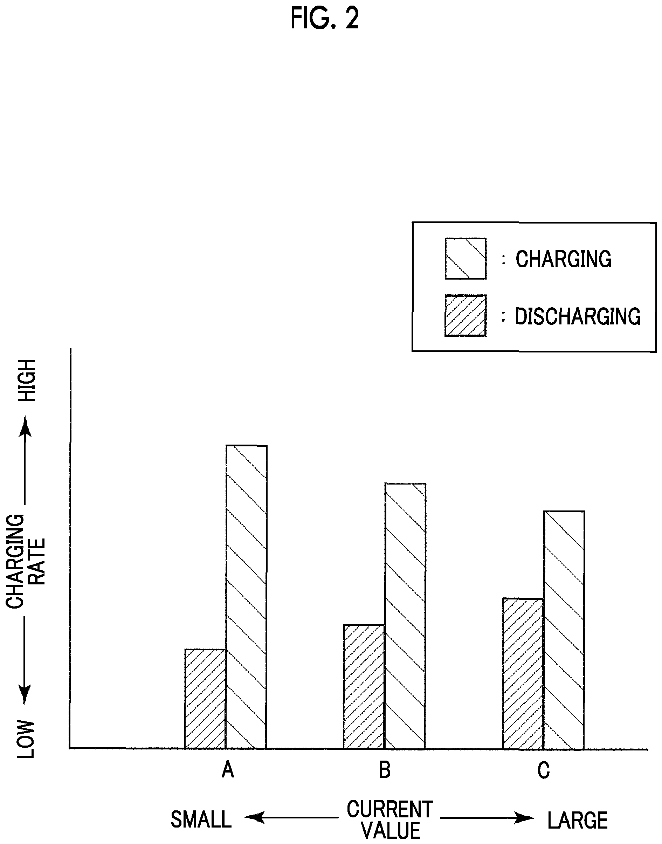

In the redox flow battery system 20 having the configuration shown in Fig. 1, the inventors of the present disclosure have studied the influence on an upper limit value of charging and a lower limit value of discharging in the redox flow battery 1 in a case where current values supplied to the redox flow battery 1 from the power supply device 17 are different under a condition that flow rates of the first electrolytic solution 12 and the second electrolytic solution 13 are constant. The results are illustrated in Fig. 2.

Fig. 2 illustrates an upper limit value of a charging rate (upper limit value of charging) of the redox flow battery 1 in each pattern when the redox flow battery 1 is charged with currents of three different patterns A, B, and C (the magnitude relationship of the current values is A < B < C). Fig. 2 also illustrates a lower limit value of a charging rate that can be discharged (lower limit value of discharging) when the redox flow battery 1 is charged in each pattern, the charging rate reaches each upper limit value, and then the redox flow battery 1 is discharged at the same constant current value. According to Fig. 2, it can be seen that as a current value supplied during charging decreases, that is, in the order of the pattern C, the pattern B, and the pattern A, the upper limit value of charging increases and the lower limit value of discharging decreases.

According to the above findings obtained through this study, it is said that a usable range of power stored in the redox flow battery 1 can be expanded by reviewing an operation of a current value supplied at the time of charging the redox flow battery 1. Specifically, at the end of charging of the redox flow battery 1, that is, during charging in a state where the charging rate is high, the upper limit value of charging can be raised by lowering the current value. By performing the charging under such a condition, the lower limit value of discharging of the redox flow battery 1 can be lowered.

### <Operation related to charging/discharging of redox flow battery system according to Embodiment 1 of present disclosure>

A specific example of the operation of the redox flow battery system 20 in order to improve the operation related to the charging/discharging of the redox flow battery 1, specifically, in order to widen the usable range of power stored in the redox flow battery 1, will be described. Based on the above findings, in a case where the charging current of the redox flow battery 1 is reduced at the end of charging, the operation related to the charging/discharging of the redox flow battery 1 can be improved. In order to realize such a charging condition, a solar power generation device may be used as the power supply device 17 (refer to Fig. 1).

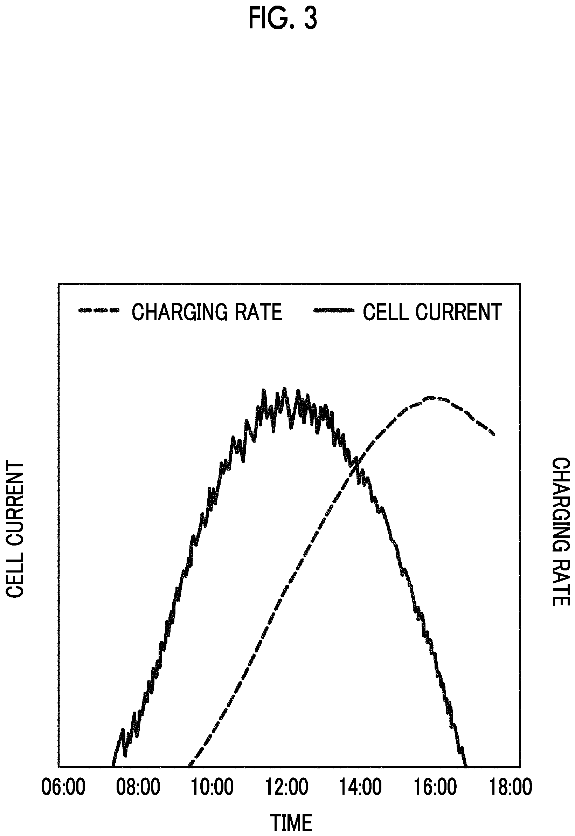

As illustrated by a solid line in Fig. 3, an amount of power generated by a solar power generation device generally transitions such that charging is started after sunrise (morning), the amount of power increases until noon, and then the amount of power generation decreases toward sunset (night). Of course, depending on the weather of the day, there may be a temporary deviation from such a transition or over a long period of time, but it is considered that such a power generation tendency is exhibited if the weather is such that power can be generated all day long. A vertical axis on the left side of the graph of Fig. 3 represents a current value (cell current) flowing through a cell of the solar power generation device as an index of a power generation amount of the solar power generation device.

When the power generated by the solar power generation device is supplied to the redox flow battery 1 in order to charge the redox flow battery 1, a current value supplied to the redox flow battery 1 increases until noon, and accordingly, as illustrated by a dashed line in Fig. 3, a charging rate of the redox flow battery 1 increases. After that, the power generated by the solar power generation device decreases toward sunset, so that the current value supplied to the redox flow battery 1 also decreases. However, this period corresponds to a period in which the charging rate of the redox flow battery 1 is high, that is, a period of the end of charging. As a result, the current value supplied to the redox flow battery 1 decreases at the end of charging of the redox flow battery 1. The increase in the charging rate of the redox flow battery 1 during this period is slower than the increase in the charging rate between sunrise and noon.

As described above, by charging the redox flow battery 1 with the power generated by the solar power generation device, it is possible to perform an operation in which the current value supplied to the redox flow battery 1 is reduced at the end of charging of the redox flow battery 1. As a result, an operation related to charging/discharging of the redox flow battery 1 can be improved. Such an operation can be performed without using a solar power generation device, and as long as a current value supplied to the redox flow battery 1 can be reduced at the end of charging of the redox flow battery 1, a power supply device having any configuration such as a tidal current power generation device that generates power in a cycle of ebb and flow of the tide (about 6 hours) may be used.

### <Modification example of redox flow battery system according to Embodiment 1 of present disclosure>

When the supply of power from the solar power generation device to the redox flow battery 1 is continued until sunset, a phenomenon in which a charging rate of the redox flow battery 1 decreases from a certain point (around 16:00 in Fig. 3) even though the battery is being charged may occur. This is because, since the redox flow battery 1 has a power loss due to an inherent shunt current based on the configuration of the redox flow battery 1, when a current supplied to the redox flow battery 1 at the end of charging of the redox flow battery 1 is smaller than the shunt current, a charging amount decreases even though charging is continued.

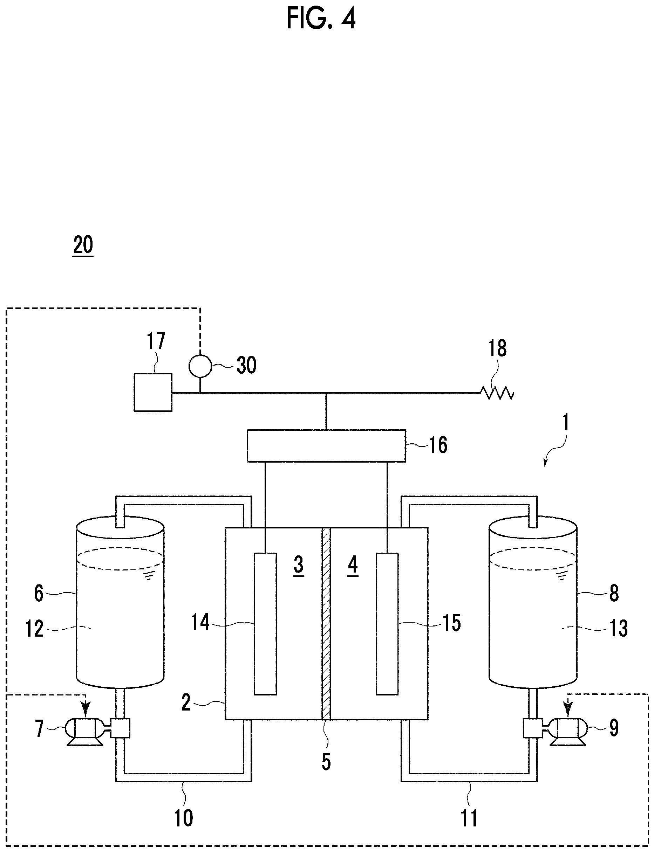

Therefore, as illustrated in Fig. 4, a current sensor 30 that is a detection device that detects a current value supplied from the solar power generation device as the power supply device 17 to the redox flow battery 1 is provided, and a lower limit value is set in advance to the current sensor 30. Here, the lower limit value can be freely determined on the basis of the shunt current peculiar to the redox flow battery 1, and may be, for example, the same value as the shunt current or a value obtained by adding several percent to the shunt current. The current sensor 30 is electrically connected to the first pump 7 and the second pump 9, and the first pump 7 and the second pump 9 can be stopped and started in response to commands from the current sensor 30.

In this modification example, when a value detected by the current sensor 30 is equal to or smaller than a predetermined lower limit value, a stop command is transmitted from the current sensor 30 to the first pump 7, the second pump 9, and the power supply device 17 to stop the first pump 7, the second pump 9, and the power supply device 17, so that the circulation of the first electrolytic solution 12 and the second electrolytic solution 13 are stopped, and charging of the redox flow battery 1 is stopped. After the charging of the redox flow battery 1 is stopped, when a value detected by the current sensor 30 exceeds the lower limit value, a start command is transmitted from the current sensor 30 to the first pump 7, the second pump 9, and the power supply device 17 to start the first pump 7 and the second pump 9, so that the circulation of the first electrolytic solution 12 and the second electrolytic solution 13 is restarted, and the charging of the redox flow battery 1 is restarted. By such an operation, it is possible to prevent a decrease in the charging amount due to a power loss due to the shunt current of the redox flow battery 1. An operator of the redox flow battery system 20 may manually stop and start the first pump 7, the second pump 9, and the power supply device 17 on the basis of values detected by the current sensor 30.

### (Embodiment 2)

Next, a redox flow battery system according to Embodiment 2 will be described. The redox flow battery system according to Embodiment 2 can cope with a primary variation in power supplied from the power supply device 17 or power consumption in the load 18 compared with Embodiment 1. In Embodiment 2, the same constituents as those of Embodiment 1 are denoted by the same reference numerals, and detailed description thereof will be omitted.

### <Configuration of redox flow battery system according to Embodiment 2 of present disclosure>

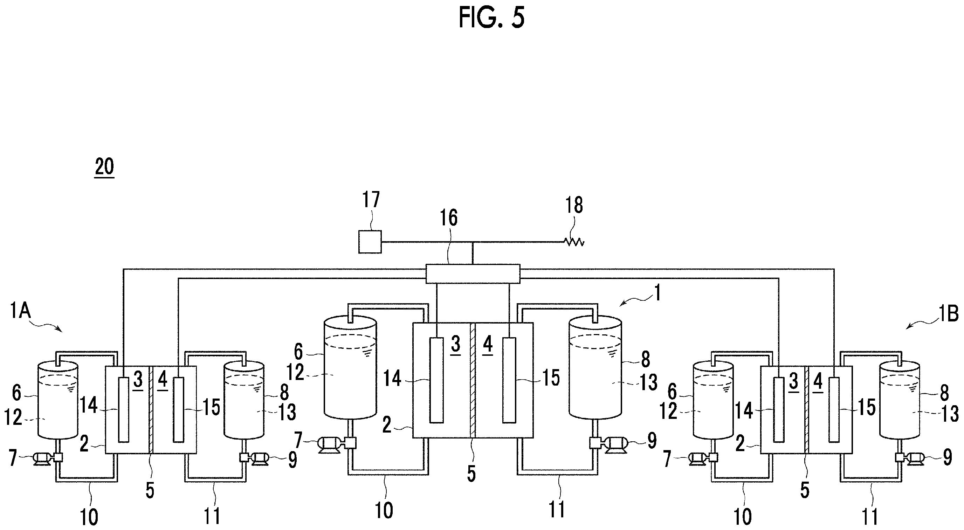

As illustrated in Fig. 5, the redox flow battery system 20 according to Embodiment 2 of the present disclosure includes, in addition to the redox flow battery 1, a charging redox flow battery 1A and a discharging redox flow battery 1B having the same configuration as that of the redox flow battery 1. The charging redox flow battery 1A and the discharging redox flow battery 1B each have the same configuration as that of the redox flow battery 1, but the former may employ a small redox flow battery of which an output and a capacity are smaller than an output and a capacity of the latter (for example, the output and the capacity of the former may be about 10% of the output and the capacity of the latter). The output and the capacity of the latter are set in accordance with a required amount (output/capacity) equal to or more than a rated value to be generated, on the basis of transition of the power consumption in the load 18.

The first electrode 14 and the second electrode 15 of the charging redox flow battery 1A and the discharging redox flow battery 1B are respectively electrically connected to the AC-DC converter 16. An initial charging rate of the charging redox flow battery 1A is set to about a lower limit value of a charging rate that can be discharged, and an initial charging rate of the discharging redox flow battery 1B is set to about an upper limit value. Other configurations are the same as those in Embodiment 1. Although Fig. 5 illustrates a configuration in which one charging redox flow battery 1A and one discharging redox flow battery 1B are provided, the present invention is not limited to this form. Only one of the charging redox flow battery 1A or the discharging redox flow battery 1B may be provided, and the number of each of the charging redox flow battery 1A and the discharging redox flow battery 1B may be two or more. Alternatively, the number of each of the charging redox flow battery 1A and the discharging redox flow battery 1B may be different from each other.

### <Operation of redox flow battery system according to Embodiment 2 of present disclosure>

In a case where the supply of power from the power supply device 17 or the power consumption in the load 18 is stable, the redox flow battery 1 is charged with the power supplied from the power supply device 17, and defined power is supplied from the redox flow battery 1 to the load 18. Therefore, an operation in Embodiment 2 in this case is the same as that in Embodiment 1.

As described in Embodiment 1, a current value supplied to the redox flow battery 1 is reduced at the end of charging of the redox flow battery 1. However, in a case where a solar power generation device is used as the power supply device 17, depending on the weather, there is a possibility that the current value supplied to the redox flow battery 1 does not fall below an assumed value. In such a case, a part of the DC current converted in the AC-DC converter 16 is supplied to the charging redox flow battery 1A, that is, power is stored not only in the redox flow battery 1 but also in the charging redox flow battery 1A. As a result, the remaining power can be stored in the charging redox flow battery 1A while continuing to improve the operation related to charging/discharging of the redox flow battery 1.

In such an operation, for example, the current sensor 30 (Fig. 4) provided in the modification example of Embodiment 1 may be provided in Embodiment 2, and a mechanism that distributes a DC current to each of the redox flow battery 1 and the charging redox flow battery 1A may be provided in the AC-DC converter 16, so that an operator of the redox flow battery system 20 manually may adjust a ratio between DC currents respectively distributed to the redox flow battery 1 and the charging redox flow battery 1A on the basis of values detected by the current sensor 30, or the ratio may be automatically adjusted by using a control device (not illustrated).

On the other hand, while power is being supplied from the redox flow battery 1 to the load 18, the power consumption in the load 18 may temporarily increase rapidly, and thus the power released from the redox flow battery 1 may not be sufficient. In such a case, the discharging redox flow battery 1B is also discharged, and power released from each of the redox flow battery 1 and the discharging redox flow battery 1B is supplied to the load 18. Consequently, it is possible to appropriately cope with fluctuations in the power consumption in the load 18.

In such an operation, an operator of the redox flow battery system 20 may manually start discharging of the discharging redox flow battery 1B on the basis of power required by the load 18, and a control device (not illustrated) may automatically start discharging of the discharging redox flow battery 1B on the basis of power required by the load 18.

In a case where the charging redox flow battery 1A is charged through the above-described operation, an initial charging rate is low, but a charging rate is high after charging. On the other hand, in a case where the discharging redox flow battery 1B is discharged through the above-described operation, an initial charging rate is high, but a charging rate is low after discharging. Therefore, after the charging redox flow battery 1A and the discharging redox flow battery 1B perform the above-described operations, the charging redox flow battery 1A can be used as a discharging redox flow battery, and the discharging redox flow battery 1B can be used as a charging redox flow battery. According to such a usage pattern, the charging redox flow battery 1A and the discharging redox flow battery 1B can be alternately diverted, and thus it is possible to save time and effort to prepare installation thereof.

### <Modification example of redox flow battery system according to Embodiment 2 of present disclosure>

In Embodiment 2, the charging redox flow battery 1A and the discharging redox flow battery 1B each include the first tank 6 and the second tank 8, but the present invention is not limited to this embodiment. There may be a configuration in which each of the charging redox flow battery 1A and the discharging redox flow battery 1B does not include the first tank 6 and the second tank 8, and the first electrolytic solution circulation path 10 and the second electrolytic solution circulation path 11 are respectively connected to the first tank 6 and the second tank 8 of the redox flow battery 1 such that each of the first electrolytic solution 12 and the second electrolytic solution is made common.

Embodiment 2 is based on improvement of the operation related to the charging/discharging of the redox flow battery 1 as described in Embodiment 1, but the present invention is not limited to this embodiment. At the end of charging of the redox flow battery 1, a part of power may be supplied to the charging redox flow battery 1A when the power supplied to the redox flow battery 1 is more than necessary under the condition that a current value supplied to the redox flow battery 1 is not reduced. In a case where power required for the load 18 cannot be covered by power released from the redox flow battery 1 alone, power may also be supplied to the load 18 from the discharging redox flow battery 1B.

For example, the contents described in each embodiment are understood as follows.
[1] A redox flow battery system according to one aspect includes a redox flow battery (1); and
   a power supply device (17) that supplies power for charging the redox flow battery (1) to the redox flow battery (1), in which
   the power supply device (17) reduces the power supplied to the redox flow battery (1) toward an end of charging of the redox flow battery (1).

According to the redox flow battery system of the present disclosure, the upper limit value of charging of the redox flow battery can be increased by reducing the power supplied to the redox flow battery toward the end of charging of the redox flow battery. At the same time, since the lower limit value of the discharge of the redox flow battery can be lowered, it is possible to improve the operation related to the charging/discharging of the redox flow battery.

[2] In a redox flow battery system according to another aspect, which is the redox flow battery system according to [1],
the power supply device (17) is a solar power generation device.

A solar power generation device generally exhibits a behavior in which a power generation output increases from morning to daytime and a power generation output decreases from daytime to sunset. When the behavior for the power generation output of the solar power generation device from daytime to sunset is used for supplying power at the end of charging of the redox flow battery, the power supplied to the redox flow battery can be reduced toward the end of charging of the redox flow battery.

[3] In a redox flow battery system according to still another aspect, which is the redox flow battery system according to [1],
the power supply device is a tidal current power generation device.

The tidal current power generation device generally generates power in a cycle of ebb and flow of the tide (about 6 hours). When the behavior of the power generation output at a timing close to high tide and low tide is used for supplying power at the end of charging of the redox flow battery, the power supplied to the redox flow battery can be reduced toward the end of charging of the redox flow battery.

[4] A redox flow battery system according to still another aspect, which is the redox flow battery system according to any one of [1] to [3], further including:
a detection device (current sensor 30) that detects a current value supplied from the power supply device (17) to the redox flow battery (1), in which
in a case where a value detected by the detection device (30) is equal to or smaller than a predetermined lower limit value, charging of the redox flow battery (1) is stopped.

The redox flow battery has a power loss due to an inherent shunt current based on the configuration of the redox flow battery. When a current supplied to the redox flow battery at the end of charging of the redox flow battery is smaller than the shunt current, a phenomenon occurs in which a charging amount decreases even though charging is continued. Thus, in a case where a current supplied to the redox flow battery is equal to or smaller than a predetermined lower limit value, charging of the redox flow battery can be stopped to prevent a decrease in a charging amount caused by a power loss due to the shunt current.

[5] In a redox flow battery system according to still another aspect, which is the redox flow battery system according to [4],
the lower limit value is determined on the basis of a shunt current of the redox flow battery (1).

According to such a configuration, in a case where a supplied current is equal to or smaller than the lower limit value determined on the basis of the shunt current of the redox flow battery, the supply of power of the redox flow battery from the power supply device to the redox flow battery can be stopped to prevent a decrease in a charging amount caused by a power loss due to the shunt current.

[6] A redox flow battery system according to still another aspect, which is the redox flow battery system according to [1] to [5], further including:
at least one charging redox flow battery (1A) that is chargeable with the power from the power supply device (17).

According to such a configuration, in a case where the power supplied from the power supply device is larger than power required for charging, the surplus power is stored in a charging redox flow battery, and thus it is possible to improve an operation related to charging of the redox flow battery.

[7] In a redox flow battery system according to still another aspect, which is the redox flow battery system according to [1] to [6],
the redox flow battery (1) is electrically connected to a load (18) capable of consuming the power released from the redox flow battery (1), and
the redox flow battery system further includes at least one discharging redox flow battery (1B) electrically connected to be capable of supplying power to the load (18).

According to such a configuration, in a case where the power consumption in the load fluctuates and power required for the load cannot be covered by an output amount of the redox flow battery, it is possible to appropriately cope with fluctuations in the power consumption in the load by supplying the power stored in the discharging redox flow battery to the load.

[8] In a redox flow battery system according to still another aspect, which is the redox flow battery system according to [6], in which
the redox flow battery is electrically connected to a load capable of consuming the power released from the redox flow battery,
the redox flow battery system further includes at least one discharging redox flow battery electrically connected to be capable of supplying power to the load, and
among the at least one charging redox flow battery, a charging redox flow battery charged with the power from the power supply device is used as one of the at least one discharging redox flow battery, and among the at least one discharging redox flow battery, a discharging redox flow battery that has supplied power to the load is used as one of the at least one charging redox flow battery.

According to such a configuration, the charging redox flow batteries and the discharging redox flow batteries can be alternately diverted, so that it is possible to save time and effort to prepare installation thereof.

### Reference Signs List

- 1: Redox flow battery
- 1A: Charging redox flow battery
- 1B: Discharging redox flow battery
- 17: Power supply device
- 18: Load
- 20: Redox flow battery system
- 30: Current sensor (detection device)

## Claims

1. A redox flow battery system comprising:
a redox flow battery; and
a power supply device that supplies power for charging the redox flow battery to the redox flow battery, wherein
the power supply device reduces the power supplied to the redox flow battery toward an end of charging of the redox flow battery.

2. The redox flow battery system according to claim 1, wherein the power supply device is a solar power generation device.

3. The redox flow battery system according to claim 1, wherein the power supply device is a tidal current power generation device.

4. The redox flow battery system according to any one of claims 1 to 3, further comprising:
a detection device that detects a current value supplied from the power supply device to the redox flow battery, wherein
in a case where a value detected by the detection device is equal to or smaller than a predetermined lower limit value, charging of the redox flow battery is stopped.

5. The redox flow battery system according to claim 4, wherein the lower limit value is determined on the basis of a shunt current of the redox flow battery.

6. The redox flow battery system according to any one of claims 1 to 5, further comprising at least one charging redox flow battery that is chargeable with the power from the power supply device.

7. The redox flow battery system according to any one of claims 1 to 6, wherein
the redox flow battery is electrically connected to a load capable of consuming the power released from the redox flow battery, and
the redox flow battery system further comprises at least one discharging redox flow battery electrically connected to be capable of supplying power to the load.

8. The redox flow battery system according to claim 6, wherein
the redox flow battery is electrically connected to a load capable of consuming the power released from the redox flow battery,
the redox flow battery system further comprises at least one discharging redox flow battery electrically connected to be capable of supplying power to the load, and
among the at least one charging redox flow battery, a charging redox flow battery charged with the power from the power supply device is used as one of the at least one discharging redox flow battery, and among the at least one discharging redox flow battery, a discharging redox flow battery that has supplied power to the load is used as one of the at least one charging redox flow battery.
